(19) Europäisches Patentamt
European Patent Office
Office européen des brevets

(11) EP 2 832 750 A1

(12) EUROPEAN PATENT APPLICATION
published in accordance with Art. 153(4) EPC

(43) Date of publication:
04.02.2015 Bulletin 2015/06

(21) Application number: 13770318.7

(22) Date of filing: 01.04.2013

(51) Int Cl.:
*C08B 37/16* (2006.01) *C08G 65/04* (2006.01)

(86) International application number:
PCT/JP2013/059909

(87) International publication number:
WO 2013/147300 (03.10.2013 Gazette 2013/40)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 30.03.2012 JP 2012082226

(71) Applicants:
- Ube Industries, Ltd.
Ube-shi, Yamaguchi 780-8633 (JP)
- Advanced Softmaterials Inc.
Kashiwa-shi
Chiba 277-0882 (JP)

(72) Inventors:
- OOMORI, Kiyoshi
Ube-shi
Yamaguchi 755-8633 (JP)
- SADAIKE, Shinichiro
Ube-shi
Yamaguchi 755-8633 (JP)
- TSUGAWA, Mitsumasa
Ube-shi
Yamaguchi 755-8633 (JP)
- FUJIMOTO, Mikio
Ube-shi
Yamaguchi 755-8633 (JP)
- IWATA, Minoru
Kashiwa-shi
Chiba 277-0882 (JP)
- HAYASHI, Yuki
Kashiwa-shi
Chiba 277-0882 (JP)

(74) Representative: Hoffmann Eitle
Patent- und Rechtsanwälte PartmbB
Arabellastraße 30
81925 München (DE)

# (54) PROCESS FOR PRODUCING HYDROXYALKYLATED POLYROTAXANE

(57) The invention provides an industrially advantageous method for the production of hydroxyalkylated polyrotaxanes. The method of producing hydroxyalkylated polyrotaxane includes reacting a polyrotaxane with a cyclic ether represented by Formula (1) in the presence of water and an organic base, wherein the polyrotaxane includes hydroxyl group-containing cyclic molecules, a linear molecule threaded through the cyclic molecules to form a clathrate, and blocking groups at both ends of the linear molecule to prevent the separation of the cyclic molecules from the linear molecule.



Printed by Jouve, 75001 PARIS (FR)

## Description

### TECHNICAL FIELD

The present invention relates to methods for producing a hydroxyalkylated polyrotaxane by reacting a polyrotaxane with a specific cyclic ether.

### BACKGROUND ART

A polyrotaxane, which is a constituent of a crosslinked polyrotaxane recently known as a topological gel, is a clathrate compound that includes a linear molecule (an axis) threaded through the openings of cyclic molecules (rotators), the linear molecule having blocking groups at its both ends to prevent the separation of the cyclic molecules (see, for example, Patent Literatures 1 to 5).

For example, Patent Literature 1 discloses a polyrotaxane having cyclodextrin as the cyclic molecules, and also discloses a method for producing a hydroxypropylated polyrotaxane by the hydroxypropylation of the cyclodextrin through the reaction with propylene oxide in a 1 N aqueous sodium hydroxide solution. Patent Literature 2 describes a method for the synthesis of a crosslinked polyrotaxane by crosslinking a blocked polyrotaxane with a crosslinking agent such as cyanuric chloride.

Further, Patent Literatures 3 and 4 report that materials obtained by secondary processing of hydroxypropylated polyrotaxanes are useful in applications such as, for example, medical materials and coatings.

Methods for the alkyl etherification of alcoholic hydroxyl groups with oxiranes (alkylene oxides) are described in Patent Literatures 1 and 2 and also in other various documents. Such methods exclusively involve inorganic bases such as alkali metal salts, and metal alkoxides (see, for example, Patent Literatures 5 to 7 and Non Patent Literature 1).

Patent Literature 1: International Publication No. 2005/080469
Patent Literature 2: International Publication No. 2001/083566
Patent Literature 3: Japanese Patent Application Kokai Publication No. H10-306104
Patent Literature 4: Japanese Patent Application Kokai Publication No. 2011-178931
Patent Literature 5: Japanese Patent Application Kokai Publication No. S59-104334
Patent Literature 6: Japanese Patent Application Kokai Publication No. 2002-212125
Patent Literature 7: Japanese Patent Kohyo Publication No. 2011-509998

Non Patent Literature 1: Applied Catalysis B: Environmental, Vol. 104 54-63 (2011)

### SUMMARY OF INVENTION

#### Technical Problem

In accordance with a method described in, for example, Patent Literature 1, the present inventors made an attempt to obtain a hydroxypropylated polyrotaxane by reacting a polyrotaxane having cyclodextrin as cyclic molecules with propylene oxide in a 1 N aqueous sodium hydroxide solution. The present inventors have then found that insoluble matters are precipitated during the reaction to make it difficult to obtain a polyrotaxane having the desired hydroxypropylation modification rate with high purity. Such insoluble matters are incorporated into the hydroxypropylated polyrotaxane obtained and consequently find their way into secondary processed materials produced from the hydroxypropylated polyrotaxane as a raw material. For example, these insoluble matters will form granular structures (for example, projections) in the coating application described in Patent Literature 4. Patent Literature 1 and Patent Literature 4 disclose methods for the treatment after the reaction between a polyrotaxane and propylene oxide in an aqueous sodium hydroxide solution. In the disclosed methods, the alkali that has been used is neutralized and the resultant salt is removed by dialysis, and the dialyzed treatment liquid is freeze dried to give a target hydroxypropylated polyrotaxane. These treatment methods involving the salt removal are complicated and take an extremely long treatment time. Thus, the methods are hardly suited for industrial production.

An object of the present invention is to provide an industrially advantageous method for the production of hydroxyalkylated polyrotaxanes. In more detail, the invention has an object of providing a method that can produce a polyrotaxane having the desired hydroxyalkylation modification rate in such a manner that the polyrotaxane may be obtained with high purity through simple operations while suppressing the formation of insoluble matters during the reaction.

Solution to Problem

To achieve the above object, the present inventors have found the following. Invention 1 resides in a method of producing hydroxyalkylated polyrotaxane comprising:

reacting a polyrotaxane with a cyclic ether in the presence of water and an organic base, wherein the polyrotaxane comprises hydroxyl group-containing cyclic molecules, a linear molecule threaded through the cyclic molecules to form a clathrate, and blocking groups at both ends of the linear molecule to prevent the separation of the cyclic molecules from the linear molecule, the cyclic ether being represented by Formula (1):

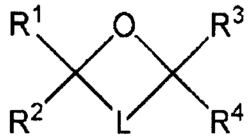

(1)

wherein $R^1$ to $R^4$ are each independently a hydrogen atom, or an alkyl, cycloalkyl, aryl or aralkyl group optionally substituted with a fluorine atom, a nitro group, a cyano group, an alkoxy group or a hydroxyl group,
$R^1$ and $R^2$, or $R^3$ and $R^4$ may form a 3- to 12-membered carbon ring (for example, an oxaspiroalkylene) together with the carbon atom bonded therewith,
$R^1$ or $R^2$, and $R^3$ or $R^4$ may form a 3- to 12-membered carbon ring (for example, an oxabicycloalkane) together the with carbon atoms bonded therewith,
L is a single bond or an alkylene group of 1 to 12 carbon atoms optionally substituted with a fluorine atom, a nitro group, a cyano group, an alkoxy group or a hydroxyl group, and
the number of carbon atoms in Formula (1) is not more than 50.

Invention 2 resides in the method according to Invention 1, wherein the organic base is one or more selected from the group consisting of aliphatic tertiary amines, aromatic tertiary amines, alicyclic tertiary amines, heteroalicyclic tertiary amines, pyridines, imidazoles and triazoles.
Invention 3 resides in the method according to Invention 2, wherein the organic base is one or more selected from the group consisting of trialkylamines and pyridines.
Invention 4 resides in the method according to any of Inventions 1 to 3, wherein the amount of the organic base(s) used is from 0.10 mol to less than 1 mol with respect to 1 mol of the hydroxyl groups in the polyrotaxane that is a production raw material.
Invention 5 resides in the method according to any of Inventions 1 to 4, wherein the cyclic ether represented by Formula (1) is one or more selected from the group consisting of oxirane, monosubstituted oxiranes of 3 to 24 carbon atoms, and disubstituted oxiranes of 4 to 24 carbon atoms.
Invention 6 resides in the method according to Invention 5, wherein the cyclic ether represented by Formula (1) is one or more selected from the group consisting of oxirane, methyloxirane, ethyloxirane, propyloxirane, butyloxirane, phenyloxirane and glycidol.
Invention 7 resides in the method according to any of Inventions 1 to 6, wherein the hydroxyl group-containing cyclic molecules are $\alpha$-cyclodextrins.
Invention 8 resides in the method according to any of Inventions 1 to 7, wherein the method includes removing at least part of the organic base by decantation after the polyrotaxane is reacted with the cyclic ether represented by Formula (1).

Advantageous Effects of Invention

According to the invention, industrially advantageous methods for the production of hydroxyalkylated polyrotaxanes are provided. In more detail, the inventive methods can produce a polyrotaxane having the desired hydroxyalkylation modification rate with high purity by simple operations while suppressing the formation of insoluble matters during the reaction. The hydroxyalkylated polyrotaxanes obtained in this manner may be suitably used in various applications without problems.

MODE FOR CARRYING OUT INVENTION

The present invention relates to methods for producing a hydroxyalkylated polyrotaxane by reacting a polyrotaxane with a specific cyclic ether. In the invention, the polyrotaxane includes hydroxyl group-containing cyclic molecules,

a linear molecule threaded through the cyclic molecules to form a clathrate, and blocking groups at both ends of the linear molecule to prevent the separation of the cyclic molecules from the linear molecule. The specific cyclic ether is a compound represented by Formula (1) described above. The method of the invention includes a step of reacting the hydroxyl groups of the cyclic molecules in the polyrotaxane with the specific cyclic ether in the presence of water and an organic base.

The invention may further involve a step of removing at least part of the organic base used, without neutralizing the solution of the hydroxyalkylated polyrotaxane obtained by the above step.

[Polyrotaxanes]

The polyrotaxane in the invention includes hydroxyl group-containing cyclic molecules, a linear molecule threaded through the cyclic molecules to form a clathrate, and blocking groups at both ends of the linear molecule to prevent the separation of the cyclic molecules from the linear molecule. Such polyrotaxanes may be produced by known methods, for example, a method described in Patent Literature 1, 2 or 4.

(Linear molecules)

In the invention, the linear molecules are not particularly limited as long as the molecules or substances are linear and can form clathrates with cyclic molecules in a non-covalent manner. Examples are described below.

Examples include polyalkylene glycols (for example, polyalkylene glycols in which the alkylene moiety in the repeating unit has 2 to 14 carbon atoms) such as polyethylene glycol, polypropylene glycol, polytetramethylene glycol, polypentamethylene glycol and polyhexamethylene glycol;

aliphatic polyesters (for example, aliphatic polyesters in which the alkylene moiety in the repeating unit has 1 to 14 carbon atoms) such as polybutyrolactone and polycaprolactone;

polyolefins (for example, polyolefins in which the olefin unit has 2 to 12 carbon atoms) such as polyethylene, polypropylene and polybutene;

polydialkylsiloxanes (for example, polydialkylsiloxanes in which the alkyl moiety bonded to the silicon atom has 1 to 4 carbon atoms) such as polydimethylsiloxane;

polydienes (for example, polydienes in which the diene unit has 4 to 12 carbon atoms) such as polybutadiene and polyisoprene;

polycarbonates (for example, polycarbonates in which the hydrocarbon moiety in the repeating unit has 2 to 12 carbon atoms) such as polyethylene carbonate, polypropylene carbonate, polytetramethylene carbonate, polypentamethylene carbonate, polyhexamethylene carbonate and polyphenylene carbonate;

celluloses such as carboxymethylcellulose, hydroxyethylcellulose and hydroxypropylcellulose;

(meth)acrylic polymers such as poly(meth)acrylic acid, poly(meth)acrylate esters (for example, polymethyl methacrylate and polymethyl acrylate), poly(meth)acrylamides, poly(meth)acrylonitriles, and copolymers obtained by copolymerizing a plurality of monomers selected from (meth)acrylic acid, (meth)acrylate esters, (meth)acrylamides and (meth)acrylonitriles;

polyamides (for example, nylon 6 and nylon 66), polyimides, polysulfonic acids, polyimines, polyureas, polysulfides, polyphosphazenes, polyketones, polyether ether ketones, polyphenylenes (for example, polyphenylene ethers), and polytetrahydrofurans (for example, glabrescol).

The linear molecules in the invention are preferably polyalkylene glycols, polyesters, polyolefins, polydienes or polydialkylsiloxanes; more preferably polyethylene glycol, polypropylene glycol, polytetramethylene glycol, polybutyrolactone, polycaprolactone, polyethylene, polypropylene, polybutene, polyisoprene, polybutadiene or polydimethylsiloxane; and particularly preferably polyethylene glycol, polypropylene glycol, polyethylene, polypropylene or polydimethylsiloxane. In view of the introduction of the blocking groups, it is preferable that the both ends of the linear molecule be carboxyl groups.

The number average molecular weight of the linear molecules in the invention is not particularly limited, but is preferably 200 to 200,000, more preferably 1,000 to 100,000, still more preferably 3,000 to 50,000, and particularly preferably 5,000 to 45,000. The number average molecular weight of the linear molecules is a value measured by, for example, gel permeation chromatography (GPC, standard substance: polystyrene, pullulan or polyethylene oxide).

When the weight average molecular weight of the linear molecules is 200 or more, enhanced properties tend to be obtained when the obtainable polyrotaxane is, for example, crosslinked into a crosslinked polyrotaxane. On the other hand, the polyrotaxane tends to be prepared more easily when the weight average molecular weight of the linear molecules is 200,000 or less.

(Blocking groups)

In the invention, the blocking groups are introduced to the both ends of the linear molecule to prevent the cyclic molecules from being dissociated from the linear molecule. Any groups having such a function may be used without limitation.

Examples of the blocking groups include dinitrobenzene-derived groups (for example, 2,4-dinitrophenyl group and 3,5-dinitrophenyl group), cyclodextrin-derived groups, adamantane-derived groups (for example, adamantyl group), triphenylmethane-derived groups (for example, trityl group), fluorescein-derived groups, pyrene-derived groups, substituted benzene-derived groups, optionally substituted polynuclear aromatic groups, and steroid-derived groups. The blocking groups are preferably dinitrobenzene-derived groups, cyclodextrin-derived groups, adamantane-derived groups, triphenylmethane-derived groups, fluorescein-derived groups or pyrene-derived groups, more preferably 2,4-dinitrophenyl groups, 3,5-dinitrophenyl groups, 2,4-diphenylphenyl groups, 2,4-diisopropylphenyl groups, 2,4-di-t-butylphenyl groups, 4-diphenylaminophenyl groups, 4-diphenylphosphinylphenyl groups, adamantyl groups or trityl groups, and particularly preferably 2,4-dinitrophenyl groups, 3,5-dinitrophenyl groups, adamantyl groups or trityl groups. The blocking groups introduced at the both ends of the polyrotaxane molecule in the invention may be the same or different from each other.

The blocking agents used in the invention to introduce the blocking groups at the both ends of the linear molecule may be amines including the blocking groups. For example, the amines including the blocking groups may be hydrates, inorganic acid salts (such as hydrochloride salts and hydrobromide salts) or organic acid salts (such as methanesulfonate salts and toluenesulfonate salts).

According to the reaction method in the invention, the amine may be reacted with the carboxylated both ends of the linear molecule to introduce the blocking groups. Specifically, adamantylamine or a hydrochloride salt thereof is preferably used as the blocking agent.

(Cyclic molecules)

The cyclic molecule in the invention is not particularly limited as long as the molecule has a hydroxyl group (an OH group) capable of reacting with the cyclic ether represented by Formula (1) and has a cyclic molecular structure which permits the inclusion of the linear molecule therethrough to provide a pulley effect. The cyclic molecular structure is not necessarily a closed ring molecular shape, but may be a substantially cyclic structure which is partly open, such as a "C" shape. The cyclic molecule includes one or more hydroxyl groups and may further contain substituents which are not detrimental to the hydroxyalkylation reaction such as nitro groups, cyano groups and alkoxy groups.

Examples of the cyclic molecules include cyclodextrins, crown ethers, benzocrowns, dibenzocrowns and dicyclohexanocrowns. All such molecules will contain one or more hydroxyl groups.

The cyclic molecules are preferably cyclodextrins and cyclodextrin derivatives. The forms of cyclodextrins in the cyclodextrins and the cyclodextrin derivatives are not particularly limited and may be any of the α type, the β type, the γ type, the δ type and the ε type. Examples of the cyclodextrin derivatives include cyclodextrins in which part of the hydroxyl groups have been converted to other groups such as methoxy groups, acetyloxy groups, benzoyloxy groups, alkylsulfonyloxy groups or toluenesulfonyloxy groups.

Examples of the cyclodextrins and the cyclodextrin derivatives include cyclodextrins such as α-cyclodextrin (the number of glucoses = 6), β-cyclodextrin (the number of glucoses = 7) and γ-cyclodextrin (the number of glucoses = 8); dimethylcyclodextrin, glucosylcyclodextrin, 2-hydroxypropyl-α-cyclodextrin, 2,6-di-O-methyl-α-cyclodextrin, 6-O-α-maltosyl-α-cyclodextrin, 6-O-α-D-glucosyl-α-cyclodextrinmono, hexakis(2,3,6-tri-O-acetyl)-α-cyclodextrin, hexakis(2,3,6-tri-O-methyl)-α-cyclodextrin, hexakis(6-O-tosyl)-α-cyclodextrin, hexakis(6-amino-6-deoxy)-α-cyclodextrin, hexakis(2,3-acetyl-6-bromo-6-deoxy)-α-cyclodextrin, hexakis(2,3,6-tri-O-octyl)-α-cyclodextrin, mono(2-O-phosphoryl)-α-cyclodextrin, mono[2,(3)-O-(carboxymethyl)]-α-cyclodextrin, octakis(6-O-t-butyldimethylsilyl)-α-cyclodextrin, succinyl-α-cyclodextrin, glucuronylglucosyl-β-cyclodextrin, heptakis(2,6-di-O-methyl)-β-cyclodextrin, heptakis(2,6-di-O-ethyl)-β-cyclodextrin, heptakis(6-O-sulfo)-β-cyclodextrin, heptakis(2,3-di-O-acetyl-6-O-sulfo)-β-cyclodextrin, heptakis(2,3-di-O-methyl-6-O-sulfo)-β-cyclodextrin, heptakis(2,3,6-tri-O-acetyl)-β-cyclodextrin, heptakis(2,3,6-tri-O-benzoyl)-β-cyclodextrin, heptakis(2,3,6-tri-O-methyl)-β-cyclodextrin, heptakis(3-O-acetyl-2,6-di-O-methyl)-β-cyclodextrin, heptakis(2,3-O-acetyl-6-bromo-6-deoxy)-β-cyclodextrin, 2-hydroxyethyl-β-cyclodextrin, hydroxypropyl-β-cyclodextrin, 2-hydroxypropyl-β-cyclodextrin, (2-hydroxy-3-N,N,N-trimethylamino)propyl-β-cyclodextrin, 6-O-α-maltosyl-β-cyclodextrin, methyl-β-cyclodextrin, hexakis(6-amino-6-deoxy)-β-cyclodextrin, bis(6-azide-6-deoxy)-β-cyclodextrin, mono(2-O-phosphoryl)-β-cyclodextrin, hexakis[6-deoxy-6-(1-imidazolyl)]-β-cyclodextrin, monoacetyl-β-cyclodextrin, triacetyl-β-cyclodextrin, monochlorotriazinyl-β-cyclodextrin, 6-O-α-D-glucosyl-β-cyclodextrin, 6-O-α-D-maltosyl-β-cyclodextrin, succinyl-β-cyclodextrin, succinyl-(2-hydroxypropyl)-β-cyclodextrin, 2-carboxymethyl-β-cyclodextrin, 2-carboxyethyl-β-cyclodextrin, butyl-β-cyclodextrin, sulfopropyl-β-cyclodextrin, 6-monodeoxy-6-monoamino-β-cyclodextrin, silyl[(6-O-t-butyldimethyl)-2,3-di-O-acetyl]-β-cyclodextrin, 2-hydroxyethyl-γ-cyclodextrin, 2-hydroxypropyl-γ-cyclodextrin, butyl-γ-cyclodextrin, 3A-amino-3A-deoxy-(2AS,3AS)-γ-cyclodextrin, mono-2-O-(p-toluenesulfonyl)-γ-cyclodextrin, mono-6-O-(p-toluenesulfonyl)-γ-cyclodextrin, mono-6-O-mesitylenesulfonyl-γ-cyclodextrin, octakis(2,3,6-tri-O-methyl)-γ-cyclodextrin, octakis(2,6-di-O-phenyl)-γ-cyclodextrin, octakis(6-O-t-butyldimethylsilyl)-γ-cyclodextrin, and octakis(2,3,6-tri-O-acetyl)-γ-cyclodextrin.

From the viewpoint of inclusion or clathration properties, the cyclic molecules in the invention are preferably α-cyclodextrin, β-cyclodextrin, γ-cyclodextrin or a derivative thereof (for example, a compound in which part or all of the hydroxyl groups are substituted), more preferably α-cyclodextrin or a derivative thereof (for example, a compound in which part or all of the hydroxyl groups are substituted), and particularly preferably α-cyclodextrin.

The polyrotaxane in the invention may have a single kind of cyclic molecules, or may have plural kinds of cyclic molecules.

(Molecular weight of polyrotaxanes)

The number average molecular weight of the polyrotaxanes in the invention is preferably 10,000 to 500,000, more preferably 30,000 to 400,000, still more preferably 50,000 to 300,000, particularly preferably 90,000 to 200,000, and most preferably 100,000 to 160,000. The number average molecular weight of the polyrotaxanes is a value measured by, for example, gel permeation chromatography (GPC, standard substance: polystyrene, pullulan or polyethylene oxide).

(Inclusion rate in polyrotaxanes)

In the polyrotaxanes of the invention, the rate of the inclusion of the cyclic molecules of the linear molecule (the inclusion rate) is not particularly limited and may be selected appropriately in accordance with factors such as the desired dispersibility in solvents and the kinds of modification groups. Here, the inclusion rate, namely, the rate of the inclusion of the cyclic molecules of the linear molecule is usually 0.05 to 0.80 relative to the closest inclusion of the cyclic molecules of the linear molecule taken as 1.0 (packing rate: 100%). In the case where, for example, the linear molecule is polyethylene glycol and the cyclic molecules are cyclodextrin, the inclusion rate is preferably 0.05 to 0.65, more preferably 0.10 to 0.60, still more preferably 0.15 to 0.55, and particularly preferably 0.20 to 0.40. With an inclusion rate in this range, the hydroxyalkylated polyrotaxane obtained by the inventive production method may be crosslinked into a crosslinked polyrotaxane such as one described in Patent Literature 2 so as to ensure that a sufficient pulley effect ascribed to the cyclic molecules is obtained and the cyclic molecules exhibit good mobility.

The maximum amount of the inclusion of the cyclic molecules may be determined in accordance with the length of the linear molecule and the thickness of the cyclic molecules. When, for example, the linear molecule is polyethylene glycol and the cyclic molecules are α-cyclodextrin (α-CD) molecules, the maximum amount of inclusion may be determined by, for example, the method described in Patent Literature 4 and/or Macromolecules, 1993, Vol. 26, pp. 5698-5703. For example, the maximum inclusion rate may be expressed relative to the closest inclusion of α-CD (the maximum amount of inclusion) taken as 1.0 (packing rate: 100%) while roughly assuming that two repeating units $-CH_2-CH_2-O-$ in PEG are equivalent to the thickness of one α-CD molecule. Further, the inclusion rate may be calculated by analyzing a solution of the obtained polyrotaxane in a measurement solvent (DMSO-$d_6$) on a $^1$H-NMR spectrometer (AVANCE 500 model manufactured by Bruker BioSpin) and comparing the integral value assigned to cyclodextrin-derived protons with a chemical shift of 4 to 6 ppm to the integral value assigned to PEG-derived protons with a chemical shift of 3 to 4 ppm.

[Cyclic ethers]

The cyclic ether in the invention is a compound having up to 50 carbon atoms that is represented by Formula (1) below:

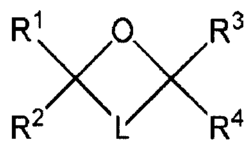

(1)

In the formula, $R^1$ to $R^4$ are each independently a hydrogen atom, or an alkyl, cycloalkyl, aryl or aralkyl group optionally substituted with a fluorine atom, a nitro group, a cyano group, an alkoxy group or a hydroxyl group,
$R^1$ and $R^2$, or $R^3$ and $R^4$ may form a 3- to 12-membered carbon ring (for example, an oxaspiroalkylene) together the with carbon atom bonded therewith,
$R^1$ or $R^2$, and $R^3$ or $R^4$ may form a 3- to 12-membered carbon ring (for example, an oxabicycloalkane) together the with carbon atoms bonded therewith,

L is a single bond or an alkylene group of 1 to 12 carbon atoms optionally substituted with a fluorine atom, a nitro group, a cyano group, an alkoxy group or a hydroxyl group, and
the number of carbon atoms in Formula (1) is not more than 50.

In the invention, the cyclic ether represented by Formula (1) is preferably one or more cyclic ethers selected from the group consisting of oxiranes represented by Formula (2) below and oxetanes represented by Formula (3) below:

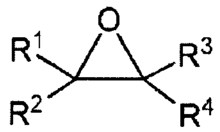

(2)

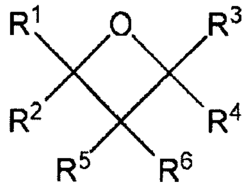

(3)

In the formulae, $R^1$ to $R^4$ are the same as described in Formula (1),
$R^5$ and $R^6$ are each a hydrogen atom, or an alkyl group of 1 to 4 carbon atoms optionally substituted with a fluorine atom, a nitro group, a cyano group, an alkoxy group or a hydroxyl group, and
the number of carbon atoms in Formula (2) or Formula (3) is not more than 50.

$R^1$ to $R^6$ in Formulae (1) to (3) are described below.

Examples of the alkyl groups include linear or branched alkyl groups of 1 to 12 carbon atoms. Preferred examples include linear or branched alkyl groups of 1 to 8 carbon atoms such as methyl group, ethyl group, n-propyl group, isopropyl group, n-butyl group, isobutyl group, sec-butyl group, tert-butyl group, pentyl group, hexyl group, heptyl group and octyl group. Of these alkyl groups, the branched alkyl groups include regioisomers and optical isomers. In Formula (3), the alkyl groups $R^5$ and $R^6$ have 1 to 4 carbon atoms and are, for example, methyl groups, ethyl groups, n-propyl groups, isopropyl groups, n-butyl groups, isobutyl groups, sec-butyl groups or tert-butyl groups.

Examples of the cycloalkyl groups include cycloalkyl groups having 3 to 12 carbon atoms. Preferred examples include cyclopropyl group, cyclobutyl group, cyclopentyl group, cyclohexyl group and cyclododecyl group.

Examples of the aryl groups include aryl groups having 6 to 18 carbon atoms. Preferred examples include phenyl group, naphthyl group and biphenyl group.

Examples of the aralkyl groups include aralkyl groups having 7 to 18 carbon atoms. Preferred examples include benzyl group and phenethyl group.

The alkyl groups, the aryl groups, the cycloalkyl groups and the aralkyl groups may be unsubstituted or may be substituted on carbon atoms with one or more substituents selected from the group consisting of a fluorine atom, a nitro group, a cyano group, an alkoxy group and a hydroxyl group. Of the substituents, a fluorine atom is preferable.

Examples of the alkylene groups of 1 to 12 carbon atoms represented by L in Formula (1) include methylene group and ethylene group. The alkylene groups may be unsubstituted or may be substituted on carbon atoms with one or more substituents selected from the group consisting of a fluorine atom, a nitro group, a cyano group, an alkoxy group and a hydroxyl group. Of the substituents, a fluorine atom is preferable. Preferably, L is a single bond or a methylene group.

Examples of the oxiranes represented by Formula (2) include:

oxirane (ethylene oxide);
monosubstituted oxiranes, preferably monosubstituted oxiranes having 3 to 26 carbon atoms, and more preferably 3 to 24 carbon atoms, such as methyloxirane (propylene oxide), ethyloxirane (1,2-butylene oxide), propyloxirane (1,2-pentylene oxide), butyloxirane (1,2-hexylene oxide), phenyloxirane, (alkoxymethyl having 1 to 8 carbon atoms)oxiranes such as methoxymethyloxirane, and glycidol (2,3-epoxymethanol);
disubstituted oxiranes, preferably disubstituted oxiranes having 4 to 26 carbon atoms, and more preferably 4 to 24 carbon atoms, such as 2,3-dimethyloxirane, 2,2-dimethyloxirane, 2,3-diethyloxirane, 2,2-diethyloxirane, 2,3-dipropyloxirane, 2,2-dipropyloxirane, 2,3-dibutyloxirane, 2,2-dibutyloxirane, 2,3-diphenyloxirane, 2,2-diphenyloxirane, 2,3-bis(alkoxymethyl having 1 to 8 carbon atoms)oxiranes, and 2,2-bis(alkoxymethyl having 1 to 8 carbon atoms)oxiranes such as 2,2-bis(methoxymethyl)oxirane;
trisubstituted oxiranes, and preferably trisubstituted oxiranes having 5 to 26 carbon atoms, such as 2,2,3-trimethyloxirane, 2,2,3-triethyloxirane, 2,2,3-tripropyloxirane, 2,2,3-tributyloxirane, 2,2,3-triphenyloxirane, and 2,2,3-tris(alkoxymethyl having 1 to 8 carbon atoms)oxiranes such as 2,2,3-tris(methoxymethyl)oxirane; and tetrasubstituted oxiranes, and preferably tetrasubstituted oxiranes having 6 to 26 carbon atoms such as 2,2,3,3-tetramethyloxirane, 2,2,3,3-tetraethyloxirane, 2,2,3,3-tetrapropyloxirane, 2,2,3,3-tetrabutyloxirane, 2,2,3,3-tetraphenyloxirane, and 2,2,3,3-tetrakis(alkoxymethyl having 1 to 8 carbon atoms)oxiranes.

Examples of the oxetanes represented by Formula (3) include:

oxetane, 3-methyloxetane, 3-ethyloxetane, and 3-ethyl-3-hydroxyethyloxetane.

Regarding the cyclic ethers represented by Formula (1), examples of the oxaspiroalkylenes in which $R^1$ and $R^2$, or $R^3$ and $R^4$ form a 3- to 12-membered carbon ring together with the carbon atom bonded therewith include 1-oxaspiro[2.4]heptane and 1-oxaspiro[2.5]octane. Specific examples of the oxabicycloalkanes in which $R^1$ or $R^2$, and $R^3$ or $R^4$ form a 3- to 12-membered carbon ring together the with carbon atoms bonded therewith include 6-oxabicyclo[3.1.0]hexane, 7-oxabicyclo[4.1.1]heptane, 6-oxabicyclo[3.2.0]heptane, 7-oxabicyclo[4.2.0]octane, 7-oxabicyclo[2.2.1]heptane, and 8-oxabicyclo[3.2.1]octane.

The cyclic ether represented by Formula (1) is preferably oxirane, a monosubstituted oxirane having 3 to 24 carbon atoms or a disubstituted oxirane having 4 to 24 carbon atoms; more preferably, for example, oxirane (ethylene oxide), methyloxirane (propylene oxide), ethyloxirane (1,2-butylene oxide), propyloxirane (1,2-pentylene oxide), butyloxirane (1,2-hexylene oxide), phenyloxirane or glycidol (2,3-epoxymethanol); and particularly preferably oxirane (ethylene oxide) or methyloxirane (propylene oxide). The method of the invention may involve a single kind or several kinds of the cyclic ethers represented by Formula (1).

(Amounts of cyclic ethers used)

In the invention, the amount of the cyclic ethers represented by Formula (1) may be controlled appropriately without limitation in accordance with the degree of hydroxyalkylation. For example, in the invention, the cyclic ether represented by Formula (1) may be usually used in an amount of 0.01 g to 100 g, preferably 0.10 g to 50 g, more preferably 0.50 g to 25 g, still more preferably 1 g to 15 g, particularly preferably 1 g to 10 g, and most preferably 1 g to 5 g with respect to 1 g of the polyrotaxane that is a production raw material.

Provided that, for example, a polyrotaxane (a polyrotaxane composed of a linear molecule: polyethylene glycol, cyclic molecules: $\alpha$-cyclodextrin ($\alpha$-CD), and blocking groups: adamantyl groups) is prepared by the method described in Patent Literature 1 and also provided that the average molecular weight and the inclusion rate are 35,000 and 0.25, respectively, the theoretical amount of hydroxyl groups in the polyrotaxane may be calculated as 13.6 mmol/g:

$$\text{(Number of hydroxyl groups [mmol/g]} = (1/\text{average molecular weight}) \times (35000/88 \times 0.25 \times 18),\ \text{average molecular weight: } 35000 + (35000/88 \times 0.25 \times 972))\text{.}$$

When the above polyrotaxane is used, the amount of the cyclic ether used may be 0.015 mol to 150 mol, preferably 0.15 mol to 75 mol, more preferably 0.50 mol to 35 mol, still more preferably 1.0 mol to 20 mol, particularly preferably 1.0 mol to 15 mol, and most preferably 1.25 to 7.5 mol with respect to 1 mol of the hydroxyl groups in the polyrotaxane that is a production raw material.

With an amount in the above range, the modification rate (%) in the inventive hydroxyalkylated polyrotaxanes described later may be controlled in the range of 0.01 to 100%, and hydroxyalkylated polyrotaxanes which preferably have a modification rate of 1 to 80%, more preferably 10 to 80%, and particularly preferably 25 to 55% may be obtained.

[Organic bases]

In the invention, the hydroxyalkylation reaction is carried out in the presence of an organic base. In light of separation and purification after the reaction, the organic base is preferably one having a boiling point of not more than 200°C.

The organic base may be one or more basic organic compounds selected from the group consisting of amines (preferably tertiary amines such as aliphatic tertiary amines, aromatic tertiary amines, alicyclic tertiary amines and heteroalicyclic tertiary amines), pyridines, imidazoles and triazoles. Preferred examples of the organic bases include tertiary amines such as aliphatic tertiary amines and aromatic tertiary amines represented by Formula (4) below, and alicyclic tertiary amines and heteroalicyclic tertiary amines.

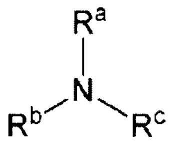

(4)

$R^a$, $R^b$ and $R^c$ are each independently an alkyl, cycloalkyl, aryl, aralkyl or trialkylsilyl group optionally substituted with a fluorine atom, a nitro group, a cyano group, an alkoxy group or a hydroxyl group.

Regarding $R^a$, $R^b$ and $R^c$ in Formula (4),
examples of the alkyl groups include linear or branched alkyl groups having 1 to 18 carbon atoms, with preferred examples including methyl group, ethyl group, n-propyl group, isopropyl group, n-butyl group and tert-butyl group;
examples of the cycloalkyl groups include cycloalkyl groups having 3 to 18 carbon atoms, with preferred examples including cyclopentyl group and cyclohexyl group;
examples of the aryl groups include aryl groups having 6 to 18 carbon atoms, with preferred examples including phenyl group, naphthyl group and anthranyl group;
examples of the aralkyl groups include aralkyl groups having 7 to 18 carbon atoms, with preferred examples including benzyl group and phenethyl group; and
examples of the trialkylsilyl groups include those in which the alkyl groups are preferably each independently a linear or branched alkyl group having 1 to 18 carbon atoms, such as trimethylsilyl group, triethylsilyl group and tert-butyldimethylsilyl group.

The alkyl groups, the aryl groups, the cycloalkyl groups, the aralkyl groups and the trialkylsilyl groups may be unsubstituted or may be substituted with one or more substituents selected from the group consisting of a fluorine atom, a nitro group, a cyano group and an alkoxy group. The substituents are preferably fluorine atoms, nitro groups or alkoxy groups.

Examples of the tertiary amines represented by Formula (4) include trialkylamines having 3 to 24 carbon atoms, such as trimethylamine, triethylamine, tri-n-propylamine, diisopropylmethylamine, and tri-n-butylamine; and trialkylsilyl group-containing aliphatic amines, preferably trialkylsilyl group-containing aliphatic amines containing a trialkylsilyl group of 5 to 24 carbon atoms, such as N-trimethylsilyldimethylamine, N-triethylsilyldimethylamine, N-tert-butyldimethylsilyldimethylamine, N-trimethylsilyldiethylamine, N-triethylsilyldiethylamine, N-tert-butyldimethylsilyldiethylamine, N-trimethylsilyl di-n-propylamine, N-triethylsilyl di-n-propylamine, N-tert-butyldimethylsilyl di-n-propylamine, N-trimethylsilyldiisopropylamine, N-triethylsilyldiisopropylamine, and N-tert-butyldimethylsilyldiisopropylamine.

Examples of the tertiary amines represented by Formula (4) further include aromatic tertiary amines having 8 to 24 carbon atoms, such as dimethylphenylamine, ethylmethylphenylamine, diethylphenylamine, dipropylphenylamine, diphenylmethylamine, diphenylethylamine, n-propyldiphenylamine, isopropyldiphenylamine, and triphenylamine; and aromatic amines containing a trialkylsilyl group having 15 to 24 carbon atoms, such as N-trimethylsilyldiphenylamine, N-triethylsilyldiphenylamine, and N-tert-butyldimethylsilyldiphenylamine.

Cyclic tertiary amines may be used as the tertiary amines. Examples thereof include alicyclic tertiary amines such as diazabicycloundecene (DBU), diazabicyclononene (DBN), 1,4-diazabicyclo[2.2.2]octane (DABCO), quinuclidine, N-substituted pyrrolidines, N-substituted piperidines, and N,N'-disubstituted piperazines, and heteroalicyclic tertiary amines such as N-substituted morpholines.

Preferred examples of the N-substituted piperidines include N-alkyl-substituted piperidines having 6 to 24 carbon atoms, such as N-methylpiperidine and N-ethylpiperidine.

Preferred examples of the N-substituted morpholines include N-alkyl-substituted morpholines having 5 to 24 carbon atoms, such as N-methylmorpholine.

Preferred examples of the N,N'-disubstituted piperazines include N,N'-dialkyl-substituted piperazines having 6 to 24 carbon atoms, such as N,N'-dimethylpiperazine.

Further, the organic bases used in the invention may be the following pyridines, imidazoles and triazoles.

Preferred examples of the pyridines (pyridine and pyridine derivatives) include pyridines having 5 to 24 carbon atoms, such as pyridine, picoline, lutidine, collidine, dimethylaminopyridine and 4-pyrrolidinopyridine.

Examples of the imidazoles (imidazole and imidazole derivatives) include imidazole and N-substituted imidazoles having 4 to 24 carbon atoms. Examples of the N-substituted imidazoles include N-alkyl-substituted imidazoles, N-aryl-substituted imidazoles and N-trialkylsilyl-substituted imidazoles, such as N-phenylimidazole, N-trimethylsilylimidazole, N-triethylsilylimidazole, and N-tert-butyldimethylsilylimidazole.

Examples of the triazoles (triazole and triazole derivatives) include triazole and N-substituted triazoles having 3 to 24 carbon atoms. Examples of the N-substituted triazoles include N-alkyl-substituted triazoles, N-aryl-substituted triazoles, and N-trialkylsilyl-substituted triazoles. Preferred examples include N-phenyltriazole.

Examples of the organic bases further include 1,8-bis(dimethylamino)naphthalene (proton sponge), and phosphazene. Further, tetraalkylguanidines having 4 to 24 carbon atoms may also be used, with examples including 1,1,3,3-tetramethylguanidine.

In the invention, the organic base is preferably a trialkylamine, an alicyclic tertiary amine, a pyridine or an imidazole; more preferably a trialkylamine or a pyridine; still more preferably a trialkylamine having 3 to 12 carbon atoms, pyridine, 2-picoline, 3-picoline, 4-picoline or 2,6-lutidine; and particularly preferably triethylamine, tri-n-propylamine, diisopropylmethylamine, tri-n-butylamine or pyridine. In the invention, the organic bases may be used singly, or a plurality of organic bases may be used in combination.

(Amounts of organic bases used)

In the invention, the amount of the organic base used may be 0.01 mol to 500 mol, preferably 0.05 mol to 50 mol, more preferably 0.10 mol to 10 mol, still more preferably 0.10 mol to 5 mol, and particularly preferably 0.10 mol to less than 1 mol with respect to 1 mol of the hydroxyl groups in the polyrotaxane that is a production raw material.

Amounts in the above range ensure that the reaction proceeds favorably to realize sufficient productivity and to achieve the desired hydroxyalkylation modification rate. Further, the above amounts are advantageous from the viewpoint of industrial production because the organic bases used may be easily removed after the completion of the reaction.

[Water]

In the invention, the hydroxyalkylation reaction is performed in the presence of water.

In the invention, the amount of water used may be 0.01 g to 200 g, preferably 0.1 g to 150 g, more preferably 1.0 g to 100 g, still more preferably 3.0 g to 50 g, particularly preferably 4.0 g to 30 g, and most preferably 4.0 g to 20 g with respect to 1 g of the polyrotaxane that is a production raw material.

When, for example, the polyrotaxane that is a production raw material is a polyrotaxane prepared by the method described in Patent Literature 1 (a polyrotaxane composed of a linear molecule: polyethylene glycol with an average molecular weight of 35,000, cyclic molecules: α-cyclodextrin (α-CD), and blocking groups: adamantyl groups, with an inclusion rate of 0.25), the theoretical amount of hydroxyl groups in the polyrotaxane is 13.6 mmol/g.

When the above polyrotaxane is used, the amount of water used may be 0.05 mol to 800 mol with respect to 1 mol of the hydroxyl groups in the polyrotaxane that is a production raw material. Amounts of water used in the above range ensure that the hydroxyalkylation reaction proceeds favorably to realize sufficient productivity and to achieve the desired hydroxyalkylation modification rate. Further, the above amounts are advantageous from the viewpoint of industrial production because the organic bases used may be easily removed after the completion of the reaction.

[Reaction conditions]

The method of the invention includes a step of reacting the hydroxyl groups of the cyclic molecules in the polyrotaxane with the cyclic ether represented by Formula (1) in the presence of water and the organic base. The reaction may be performed by mixing the polyrotaxane and the cyclic ether represented by Formula (1) with each other by a method such as stirring or shaking in the presence of water and the organic base. Specifically, the reaction is preferably performed by adding the polyrotaxane to water and the organic base and performing stirring while adding the cyclic ether represented by Formula (1).

(Reaction temperatures)

In The method of the invention, the reaction temperature may be determined appropriately in accordance with factors such as the properties of the cyclic ether represented by Formula (1). That is, the reaction temperature in The method of the invention is not particularly limited as long as the temperature is not less than the glass transition temperature of the polyrotaxane used and not more than the boiling point of the cyclic ether represented by Formula (1). For example, the reaction temperature may be -20 to 100°C. Temperatures in this range ensure that the cyclic ether represented by Formula (1) will remain in the reaction system and also that the cyclic ether will exhibit good reactivity with the hydroxyl groups of the cyclic molecules in the polyrotaxane so that high reaction yield may be expected. The reaction temperature is preferably -10 to 80°C, more preferably 10 to 60°C, and particularly preferably 25 to 60°C. The reaction time may be controlled appropriately and may be, for example, 1 to 48 hours, and preferably 3 to 30 hours.

(Reaction pressure)

In The method of the invention, the reaction pressure is not particularly limited and may be determined appropriately in accordance with factors such as the type of the cyclic ether represented by Formula (1), and the reaction

temperature. It is, however, preferable that the reaction be performed at atmospheric pressure. For example, the reaction may be performed under a stream or in an atmosphere of an inert gas such as nitrogen or argon. Alternatively, the reaction may be performed in an open system (under atmospheric pressure).

(Reaction solvents)

In The method of the invention, the reaction is performed in the presence of water and the organic base and therefore the use of a separate reaction solvent is not necessary. When, for example, the polyrotaxane used in the invention shows low solubility in water and/or the organic base, a reaction solvent may be used appropriately. The types and the amounts of the reaction solvents are not particularly limited as long as the hydroxyalkylation reaction is not adversely affected.

(Operations for obtaining hydroxyalkylated polyrotaxanes)

In the invention, the reaction between the polyrotaxane and the cyclic ether represented by Formula (1) results in a reaction mixture in the form of a liquid. For example, after a reprecipitation operation, the reaction mixture obtained may be subjected to a separation purification operation such as decantation or filtration to give the target hydroxyalkylated polyrotaxane as a solid. That is, the organic bases used may be easily removed by the above operation without involving neutralization treatment, and thus the inventive production method is very simple and is suited for industrial production.

Specifically, the hydroxyalkylated polyrotaxane is preferably obtained as a solid by subjecting the reaction mixture containing the hydroxyalkylated polyrotaxane to a separation operation such as decantation and/or filtration directly or after a reprecipitation operation with the addition of an additional solvent (for example, a reprecipitation solvent) described later.

(Reprecipitation operation)

After the completion of the reaction between the polyrotaxane and the cyclic ether represented by Formula (1), a reprecipitation operation may be performed in order to obtain the target hydroxyalkylated polyrotaxane as a solid from the reaction mixture with high purity and with good yield. Here, the reprecipitation operation may refer to separating the hydroxyalkylated polyrotaxane as a solid phase from the reaction mixture or may refer to separating a liquid phase including the hydroxyalkylated polyrotaxane from the reaction mixture.

The reprecipitation solvents used in the reprecipitation operation are not particularly limited as long as the solvents are poor solvents for the target hydroxyalkylated polyrotaxane.

Preferred examples of the reprecipitation solvents include water; acetonitrile; ketones such as acetone, butanone, methyl isobutyl ketone and cyclohexanone; alcohols such as methanol, ethanol, isopropanol and ethylene glycol; ethers such as tetrahydrofuran, tetrahydropyran, 1,2-dimethoxyethane and dioxane; and mixtures of these solvents. More preferred solvents are water; acetonitrile; ketones such as acetone, butanone, methyl isobutyl ketone and cyclohexanone; alcohols such as methanol, ethanol, isopropanol and ethylene glycol; and mixtures of these solvents. Water; ketones such as acetone, butanone, methyl isobutyl ketone and cyclohexanone; and mixtures of these solvents are particularly preferable.

The amount of the reprecipitation solvent used is not particularly limited as long as the amount is such that the target hydroxyalkylated polyrotaxane may be separated in the form of a solid or a liquid containing the target compound from the reaction mixture obtained, and also such that impurities may be separated as a solution from the solid or the liquid. The reprecipitation solvent may be used in an amount of 0.1 g to 1000 g, preferably 0.5 g to 100 g, more preferably 1 g to 50 g, still more preferably 1 g to 20 g, particularly preferably 1 g to 10 g, and most preferably 1 g to 5 g with respect to 1 g of the reaction mixture obtained after the completion of the reaction.

(Decantation)

Decantation may be adopted in The method of the invention. In this operation, the solid-liquid or liquid-liquid two phase reaction mixture containing the hydroxyalkylated polyrotaxane is decanted to remove the liquid free from the hydroxyalkylated polyrotaxane (for example, the supernatant), thereby separating and purifying the hydroxyalkylated polyrotaxane and obtaining the hydroxyalkylated polyrotaxane as a solid. Here, the reaction mixture may be separated into a solid and a liquid or into two distinct liquid phases by any method without limitation. For example, the reaction mixture as obtained or the reaction mixture resulting from the reprecipitation operation with the addition of the additional solvent (for example, the reprecipitation solvent) may be allowed to stand (stand still) or may be treated with use of an appropriate device such as a centrifuge. The apparatus used in decantation is not particularly limited and may be selected appropriately in accordance with, for example, the state of separation between the solid and the liquid or the state of

separation between the two liquids.

An example of decantation will be described below. After the completion of the reaction between the polyrotaxane and the cyclic ether represented by Formula (1), a solid or a liquid is precipitated in or separated from the reaction mixture obtained. For this purpose, for example, the reaction mixture is allowed to stand (stand still) as such, or is mixed with an additional solvent (for example, a reprecipitation solvent) and allowed to stand (stand still), or is treated, for example, centrifuged with a centrifuge to give a separated liquid including a solid or a liquid, and a supernatant separated from each other. During this process, the time for which the reaction mixture is allowed to stand is not particularly limited.

When an additional solvent is added in the decantation, the additional solvent used is of the same type as the reprecipitation solvent described in the section of (Reprecipitation operation). The solvents may be used singly, or a plurality of solvents may be used in combination. The amount of the additional solvent used is the same as described in the section of (Reprecipitation operation).

Next, the supernatant solution is removed from the separated liquid by, for example, a decantation method and/or with use of a device such as a pipette or a dropper, thereby obtaining the solid or the liquid that has been separated. Further, the separated solid or liquid may be further purified as required by, for example, adding again the additional solvent used and appropriately stirring and thereafter decanting the mixture. The decantation operation may be repeated.

When a liquid is obtained by decantation, the hydroxyalkylated polyrotaxane may be obtained as a solid by removing the solvent contained in the liquid.

The solid hydroxyalkylated polyrotaxane obtained by decantation may be further purified by, for example, removing the solvent attached thereto through a filtration operation described below or by performing a reprecipitation operation in accordance with the usual polymer purification process.

(Filtration)

The filtration adopted in The method of the invention is not particularly limited as long as the hydroxyalkylated polyrotaxane may be filtered out as a solid from the reaction mixture containing the hydroxyalkylated polyrotaxane. For example, the filtration may be performed with a filter such as a filter paper, a filter cloth, a glass filter or a membrane filter. The type of the filter may be determined appropriately in accordance with factors such as the types of the organic base and the solvent used.

The filters may be used singly, or a plurality of filters may be used in combination. The reaction mixture containing the hydroxyalkylated polyrotaxane may be filtered under any pressure conditions such as atmospheric pressure, reduced pressure or increased pressure and under any temperature conditions such as room temperature, reduced temperature or increased temperature. The filtration device is not particularly limited and may be determined appropriately in accordance with factors such as the conditions and the procedures in the operation.

The hydroxyalkylated polyrotaxane of the invention obtained by the filtration may be further purified by, for example, performing a usual polymer purification operation such as rinsing with the solvent(s) used (water, the organic base and/or the reprecipitation solvent).

(Hydroxyalkylated polyrotaxanes)

(Molecular weights)

The number average molecular weight of the hydroxyalkylated polyrotaxanes obtained by the inventive production method may be 30,000 to 500,000. In consideration of the use applications of the hydroxyalkylated polyrotaxanes, however, the hydroxyalkylated polyrotaxanes are preferably produced such that the number average molecular weight thereof will be 60,000 to 400,000, more preferably 80,000 to 300,000, particularly preferably 100,000 to 200,000, and most preferably 130,000 to 160,000. The number average molecular weight of the hydroxyalkylated polyrotaxanes is a value measured by, for example, gel permeation chromatography (GPC, standard substance: polystyrene, pullulan or polyethylene oxide).

(Inclusion rate)

The inventive production method does not affect the rate of inclusion of the cyclodextrins in the polyrotaxane used as a production raw material. Thus, the hydroxyalkylated polyrotaxanes obtained by the inventive production method may maintain substantially the same inclusion rate as the polyrotaxane used as a production raw material.

(Hydroxyalkylation modification rate)

In the hydroxyalkylated polyrotaxanes obtained by the inventive production method, the rate of modification by

the hydroxyalkylation on the hydroxyl groups of the cyclic molecules (the hydroxyalkylation modification rate) is not particularly limited and may be controlled by, for example, appropriately controlling the type and the amount of the aforementioned cyclic ether represented by Formula (1), the amount of the reaction solvent, the amount of the organic base, the reaction temperature and/or the reaction time in accordance with the purpose of use of the hydroxyalkylated polyrotaxanes such as the desired dispersibility in solvents. In the specification, the hydroxyalkylation modification rate in the hydroxyalkylated polyrotaxanes indicates the proportion of the number of the hydroxyl groups in the cyclic molecules that have been hydroxyalkylated, to the total number of the hydroxyl groups in the cyclic molecules in the polyrotaxane as a production raw material. According to The method of the invention, the modification rate (%) in the hydroxyalkylated polyrotaxanes may be controlled in the range of 0.01 to 100%. Within this range, films may be formed with use of the hydroxyalkylated polyrotaxanes while suppressing the incorporation into the films of insoluble matters (projections ascribed to, for example, the attachment of foreign substances). The inventive production method may produce hydroxyalkylated polyrotaxanes preferably having a modification rate (%) of 20 to 100%, more preferably 40 to 100%, and particularly preferably 60 to 100%.

Specifically, the modification rate (%) in the hydroxyalkylated polyrotaxanes may be calculated as follows. As an example, a polyrotaxane having a theoretical amount of hydroxyl groups of 13.6 mmol/g will be discussed. When, for example, hydroxypropyl groups ($-CH_2CH(CH_3)OH$) are introduced as the modification groups to part of α-CD, the rate of modification by the hydroxypropyl groups is calculated in the same manner as the calculation of the inclusion rate described hereinabove. That is, a chart obtained in $^1$H-NMR (500 MHz; DMSO-$d_6$) spectrometry is analyzed so as to compare the measured integral value assigned to protons with a chemical shift of 4 to 6 ppm (A: the total of the protons of the hydroxyl groups in α-CD and the protons bonded to anomeric carbon atoms) to the measured integral value assigned to protons (B) of the methyl groups in the hydroxypropyl groups with a chemical shift near 0.5 to 1 ppm. The calculation of the modification rate is based on the fact that when the modification rate is 100%, the theoretical value of the protons (A) is 24 and the theoretical value of the protons (B) is 54.

For example, the hydroxyalkylated polyrotaxane obtained by the inventive production method may be reacted with a diisocyanate compound to produce a so-called crosslinked polyrotaxane in which the molecules are crosslinked via the hydroxyl groups in the hydroxyalkylated polyrotaxane. Such crosslinked polyrotaxanes are useful as topological gel materials having excellent flexibility and durability.

According to the invention, the hydroxyalkylation reaction is performed in the presence of water and the organic base and thereby the formation of insoluble matters is suppressed. Thus, polyrotaxanes having the desired hydroxyalkylation modification rate may be obtained with high purity. The hydroxyalkylated polyrotaxanes obtained in this manner may be favorably used in various applications without problems. When, for example, crosslinked polyrotaxanes produced from the hydroxyalkylated polyrotaxanes as raw materials are used in the formation of films, it is possible to suppress the conventional problem of the occurrence of projections ascribed to insoluble matters and the occurrence of projections (granular structures) ascribed to, for example, the attachment of foreign substances. Thus, a decrease in the rejection rate is expected. Accordingly, the hydroxyalkylated polyrotaxanes are advantageous materials from economic and industrial viewpoints.

## EXAMPLES

Next, the present invention will be described in detail based on Examples without limiting the scope of the invention to such Examples. Polyrotaxanes that are production raw materials in the invention are, for example, compounds with the following properties that are produced by a method similar to the literature method such as the method described in Patent Literature 1 or Patent Literature 4.

(Production raw material: polyrotaxane)

Linear molecule: polyethylene glycol (number average molecular weight (GPC*1: Mn): 35,000)
Cyclic molecules: α-cyclodextrin
Blocking groups: adamantyl groups (amide bonds at both molecular ends)
Inclusion rate: 0.25
Theoretical amount of hydroxyl groups: 13.6 mmol/g
Number average molecular weight of polyrotaxane (GPC*1: Mn): 130,000*1
* 1: A value of number average molecular weight at a peak top in a GPC spectrum was used.

(Example 1: production of hydroxypropylated polyrotaxane; organic base: triethylamine, cyclic ether: propylene oxide)

In a nitrogen atmosphere, a 200 ml volume glass flask equipped with a stirrer, a heating device, a dropping device and a thermometer was loaded with 20.0 g of the polyrotaxane (the amount of hydroxyl groups in the polyrotaxane:

0.272 mol), 5.7 g of triethylamine (0.056 mol, 0.21 mol relative to 1 mol of the hydroxyl groups in the polyrotaxane) and 100.0 g of water. While performing stirring, the liquid temperature was brought to 40°C. Next, 43.4 g of propylene oxide (0.75 mol, 2.75 mol relative to 1 mol of the hydroxyl groups in the polyrotaxane) was added dropwise to the mixture over a period of 40 minutes. After the dropwise addition, stirring was performed for another 6 hours. Consequently, the rate of residual propylene oxide in the reaction mixture reached below 10%, and the reaction was terminated. The reaction mixture obtained was observed and was found to be clear without any insoluble matters.

After the completion of the reaction, 30.0 g of water and 710.0 g of acetone were sequentially added to the reaction mixture at a liquid temperature of 40°C while performing stirring. The mixture was stirred for some time. Thereafter, stirring was discontinued and the solution was allowed to stand. Consequently, the solution was separated into two phases, and the supernatant liquid that was the upper layer was removed. Next, 140.0 g of water and 710.0 g of acetone were added to the lower layer obtained, and the supernatant liquid was removed; these operations were performed two times. Lastly, the lower layer obtained was concentrated to dryness with an evaporator to give 20.7 g of target hydroxypropylated polyrotaxane as a white solid.

In the hydroxypropylated polyrotaxane obtained, the rate of residual triethylamine was 0.47%.

(Example 2: production of hydroxypropylated polyrotaxane; organic base: triethylamine, cyclic ether: propylene oxide)

The reaction was performed by the same method as in Example 1, except that the amount of propylene oxide used was changed to 40.0 g (0.69 mol, 2.53 mol relative to 1 mol of the hydroxyl groups in the polyrotaxane). After the completion of the reaction, the reaction mixture obtained was observed and was found to be clear without any insoluble matters.

(Example 3: production of hydroxypropylated polyrotaxane; organic base: triethylamine, cyclic ether: propylene oxide)

The reaction was performed by the same method as in Example 1, except that the amount of propylene oxide used was changed to 32.2 g (0.55 mol, 2.04 mol relative to 1 mol of the hydroxyl groups in the polyrotaxane). After the completion of the reaction, the reaction mixture obtained was observed and was found to be clear without any insoluble matters.

(Example 4: production of hydroxypropylated polyrotaxane; organic base: triethylamine, cyclic ether: propylene oxide)

The reaction was performed by the same method as in Example 1, except that the amount of triethylamine used was changed to 6.4 g (0.063 mol, 0.23 mol relative to 1 mol of the hydroxyl groups in the polyrotaxane) and the amount of propylene oxide used was changed to 37.0 g (0.64 mol, 2.34 mol relative to 1 mol of the hydroxyl groups in the polyrotaxane). After the completion of the reaction, the reaction mixture obtained was observed and was found to be clear without any insoluble matters.

(Example 5: production of hydroxypropylated polyrotaxane; organic base: triethylamine, cyclic ether: propylene oxide)

The reaction was performed by the same method as in Example 1, except that the amount of triethylamine used was changed to 7.0 g (0.068 mol, 0.25 mol relative to 1 mol of the hydroxyl groups in the polyrotaxane) and the amount of propylene oxide used was changed to 37.0 g (0.63 mol, 2.34 mol relative to 1 mol of the hydroxyl groups in the polyrotaxane). After the completion of the reaction, the reaction mixture obtained was observed and was found to be clear without any insoluble matters.

(Example 6: production of hydroxypropylated polyrotaxane; organic base: triethylamine, cyclic ether: propylene oxide)

The reaction was performed by the same method as in Example 1, except that the amount of triethylamine used was changed to 8.4 g (0.083 mol, 0.31 mol relative to 1 mol of the hydroxyl groups in the polyrotaxane) and the amount of propylene oxide used was changed to 40.0 g (0.69 mol, 2.53 mol relative to 1 mol of the hydroxyl groups in the polyrotaxane). After the completion of the reaction, the reaction mixture obtained was observed and was found to be clear without any insoluble matters.

(Example 7: production of hydroxypropylated polyrotaxane; reaction temperature: 30°C, reaction time: 24 hours)

The reaction was performed by the same method as in Example 1, except that the reaction temperature was changed from 40°C to 30°C and the reaction time was 24 hours. After the completion of the reaction, the reaction mixture obtained was observed and was found to be clear without any insoluble matters.

(Example 8: production of hydroxybutylated polyrotaxane; organic base: triethylamine, cyclic ether: butylene oxide)

The reaction was performed by the same method as in Example 1, except that the amount of triethylamine used was changed to 8.4 g (0.083 mol, 0.31 mol relative to 1 mol of the hydroxyl groups in the polyrotaxane) and the propylene oxide was replaced by butylene oxide weighing 40.0 g (0.55 mol, 2.04 mol relative to 1 mol of the hydroxyl groups in the polyrotaxane). After the completion of the reaction, the reaction mixture obtained was observed and was found to be clear without any insoluble matters.

(Example 9: production of hydroxypropylated polyrotaxane; organic base: pyridine, cyclic ether: propylene oxide)

The reaction was performed by the same method as in Example 1, except that the organic base was changed from triethylamine to pyridine weighing 4.4 g (0.056 mol, 0.20 mol relative to 1 mol of the hydroxyl groups in the polyrotaxane). After the completion of the reaction, the reaction mixture obtained was observed and was found to be clear without any insoluble matters.

(Comparative Example 1: production of hydroxypropylated polyrotaxane; sodium hydroxide, cyclic ether: propylene oxide)

In a nitrogen atmosphere, a 200 ml volume glass flask equipped with a stirrer, a heating device and a thermometer was loaded with 20.0 g of the polyrotaxane (the amount of hydroxyl groups in the polyrotaxane: 0.272 mol), 6.2 g of sodium hydroxide (0.155 mol, 0.56 mol relative to 1 mol of the hydroxyl groups in the polyrotaxane) and 100.0 g of water. While performing stirring, the liquid temperature was increased to 40°C. Next, 40.0 g of propylene oxide (0.69 mol, 2.53 mol relative to 1 mol of the hydroxyl groups in the polyrotaxane) was added dropwise to the mixture over a period of 40 minutes. After the dropwise addition, stirring was performed for another 6 hours. Consequently, the rate of residual propylene oxide in the reaction mixture reached below 10%, and the reaction was terminated. The reaction mixture obtained was observed and was found to contain white insoluble matters.

After the completion of the reaction, 26.7 g of 20% hydrochloric acid was added to neutralize the reaction mixture, and subsequently 710.0 g of acetone was added. The mixture was stirred for some time. Thereafter, stirring was discontinued and the solution was allowed to stand. Consequently, the solution was separated into two phases, and the supernatant liquid that was the upper layer was removed. Next, 140.0 g of water and 710.0 g of acetone were added to the lower layer obtained, and the supernatant liquid was removed; these operations were performed two times. Lastly, the lower layer obtained was concentrated to dryness with an evaporator to give 20.7 g of target hydroxypropylated polyrotaxane as a white solid.

In the hydroxypropylated polyrotaxane obtained, the rate of residual sodium chloride was 0.04%.

(Comparative Example 2: production of hydroxypropylated polyrotaxane; sodium hydroxide, cyclic ether: propylene oxide)

The reaction was performed by the same method as in Comparative Example 1, except that the amount of sodium hydroxide used was changed to 3.3 g (0.083 mol, 0.30 mol relative to 1 mol of the hydroxyl groups in the polyrotaxane) and the amount of propylene oxide used was changed to 29.0 g (0.50 mol, 1.84 mol relative to 1 mol of the hydroxyl groups in the polyrotaxane). After the completion of the reaction, the reaction mixture obtained was observed and was found to contain white insoluble matters.

(Comparative Example 3: production of hydroxypropylated polyrotaxane; sodium hydroxide, cyclic ether: propylene oxide)

The reaction was performed by the same method as in Comparative Example 1, except that the amount of sodium hydroxide used was changed to 3.3 g (0.083 mol, 0.30 mol relative to 1 mol of the hydroxyl groups in the polyrotaxane) and the amount of propylene oxide used was changed to 25.8 g (0.44 mol, 1.63 mol relative to 1 mol of the hydroxyl groups in the polyrotaxane). After the completion of the reaction, the reaction mixture obtained was observed and was found to contain white insoluble matters.

The results of Examples and Comparative Examples are collectively described in Table 1 below.

[Table 1]

| | Organic base | | | | Reaction temp. (°C) | Reaction time (hr) | Insoluble matters (visual inspection) | Modificat ion rate*3 (%) |
|---|---|---|---|---|---|---|---|---|
| | Type | Amount*1 (molar equivalent) | Type | Amount*2 (molar equivalent) | | | | |
| Ex. 1 | Triethylamine | 0.21 | Propylene oxide | 2.75 | 40 | 6 | Absent | 49 |
| Ex. 2 | Triethylamine | 0.21 | Propylene oxide | 2.53 | 40 | 6 | Absent | 45 |
| Ex. 3 | Triethylamine | 0.21 | Propylene oxide | 2.04 | 40 | 6 | Absent | 37 |
| Ex. 4 | Triethylamine | 0.23 | Propylene oxide | 2.34 | 40 | 6 | Absent | 42 |
| Ex. 5 | Triethylamine | 0.25 | Propylene oxide | 2.34 | 40 | 6 | Absent | 46 |
| Ex. 6 | Triethylamine | 0.31 | Propylene oxide | 2.53 | 40 | 6 | Absent | 41 |
| Ex. 7 | Triethylamine | 0.21 | Propylene oxide | 2.75 | 30 | 24 | Absent | 48 |
| Ex. 8 | Triethylamine | 0.31 | Butylene oxide | 2.04 | 40 | 6 | Absent | 44 |
| Ex. 9 | Pyridine | 0.20 | Propylene oxide | 2.75 | 40 | 6 | Absent | 44 |
| Comp. Ex. 1 | Sodium hydroxide | 0.56 | Propylene oxide | 2.53 | 40 | 6 | Slightly present | 46 |
| Comp. Ex. 2 | Sodium hydroxide | 0.30 | Propylene oxide | 1.84 | 40 | 6 | Present | 50 |
| Comp. Ex. 3 | Sodium hydroxide | 0.30 | Propylene oxide | 1.63 | 40 | 6 | Present | 45 |

*1: Amount (moles) of organic base used relative to 1 mol of hydroxyl groups in polyrotaxane
*2: Amount (moles) of alkylene oxide used relative to 1 mol of hydroxyl groups in polyrotaxane
*3: Hydroxyalkylation modification rate (%) in hydroxyalkylated polyrotaxane

INDUSTRIAL APPLICABILITY

According to the present invention, industrially advantageous methods for the production of hydroxyalkylated polyrotaxanes are provided. In more detail, polyrotaxanes having the desired hydroxyalkylation modification rate may be obtained through simple operations with high purity while suppressing the formation of insoluble matters during the reaction. The methods of the invention involve organic bases and can prevent problems associated with the use of, for example, sodium hydroxide, such as the decomposition of the target compounds, the corrosion of apparatuses, and safety concerns. Further, the inventive production methods can eliminate the need of neutralization treatment with an agent such as acid and the need of dialysis treatment to remove the salt after the neutralization.

The methods of the invention may involve filtration and/or decantation to remove not only the organic bases used but also impurities (such as products from the reaction between cyclic ethers) as well as hydroxyalkylated polyrotaxanes having a hydroxyalkylation modification rate outside the desired range. In this manner, hydroxyalkylated polyrotaxanes having a specific hydroxyalkylation modification rate may be obtained in high yield and with high purity, and such hydroxyalkylated polyrotaxanes may be used favorably in various applications without problems. The hydroxyalkylated polyrotaxanes may be crosslinked to form crosslinked polyrotaxanes. Such crosslinked polyrotaxanes exhibit excellent properties such as flexibility and durability that are inherent to topological gels, and are therefore useful in applications such as, for example, packing materials, cushioning materials, buffer materials for automobiles and various apparatuses, coating materials for friction parts of apparatuses, adhesives, pressure-sensitive adhesives, sealing materials, soft contact lens materials, tire materials, electrophoresis gels, biocompatible materials, medical materials applied to the body surface such as poultice materials, coating agent materials and wound coverage materials, drug delivery systems, photographic sensitized materials, various coatings, components of coating materials including the coating materials mentioned above, separation membranes, water-swelling rubbers, water-stop tapes, hygroscopic gelling agents, fireproof covering materials for buildings, heat radiator materials, waste sludge gelling agents, chromatography carrier materials, bioreactor carrier materials, and various cell materials such as fuel cells and electrolytes.

The present invention is based on Japanese Patent Application No. 2012-082226, the entire content of which is incorporated herein by reference.

All the literatures, the patent applications and the technical standards described in the present specification are incorporated herein by reference to the same extent as when each of such literatures, patent applications and technical standards is specifically and individually described to be incorporated by reference.

## Claims

1. A method of producing hydroxyalkylated polyrotaxane comprising:

   reacting a polyrotaxane with a cyclic ether in the presence of water and an organic base, wherein the polyrotaxane comprises hydroxyl group-containing cyclic molecules, a linear molecule threaded through the cyclic molecules to form a clathrate, and blocking groups at both ends of the linear molecule to prevent the separation of the cyclic molecules from the linear molecule, the cyclic ether being represented by Formula (1):

   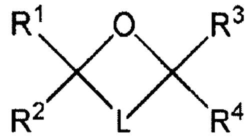

   (1)

   wherein $R^1$ to $R^4$ are each independently a hydrogen atom, or an alkyl, cycloalkyl, aryl or aralkyl group optionally substituted with a fluorine atom, a nitro group, a cyano group, an alkoxy group or a hydroxyl group,
   $R^1$ and $R^2$, or $R^3$ and $R^4$ may form a 3- to 12-membered carbon ring together with the carbon atom bonded therewith,
   $R^1$ or $R^2$, and $R^3$ or $R^4$ may form a 3- to 12-membered carbon ring together with the carbon atoms bonded therewith,
   L is a single bond or an alkylene group of 1 to 12 carbon atoms optionally substituted with a fluorine atom, a nitro group, a cyano group, an alkoxy group or a hydroxyl group, and
   the number of carbon atoms in Formula (1) is not more than 50.

2. The method according to claim 1, wherein the organic base is one or more selected from the group consisting of aliphatic tertiary amines, aromatic tertiary amines, alicyclic tertiary amines, heteroalicyclic tertiary amines, pyridines,

imidazoles and triazoles.

3. The method according to claim 2, wherein the organic base is one or more selected from the group consisting of trialkylamines and pyridines.

4. The method according to any one of claims 1 to 3, wherein the amount of the organic base(s) used is from 0.10 mol to less than 1 mol with respect to 1 mol of the hydroxyl groups in the polyrotaxane that is a production raw material.

5. The method according to any one of claims 1 to 4, wherein the cyclic ether represented by Formula (1) is one or more selected from the group consisting of oxirane, monosubstituted oxiranes of 3 to 24 carbon atoms, and disubstituted oxiranes of 4 to 24 carbon atoms.

6. The method according to claim 5, wherein the cyclic ether represented by Formula (1) is one or more selected from the group consisting of oxirane, methyloxirane, ethyloxirane, propyloxirane, butyloxirane, phenyloxirane and glycidol.

7. The method according to any one of claims 1 to 6, wherein the hydroxyl group-containing cyclic molecules are α-cyclodextrins.

8. The method according to any one of claims 1 to 7, wherein the method comprises removing at least part of the organic base by decantation after the polyrotaxane is reacted with the cyclic ether represented by Formula (1).

**INTERNATIONAL SEARCH REPORT**

International application No.
PCT/JP2013/059909

A. CLASSIFICATION OF SUBJECT MATTER
*C08B37/16*(2006.01)i, *C08G65/04*(2006.01)i

According to International Patent Classification (IPC) or to both national classification and IPC

B. FIELDS SEARCHED

Minimum documentation searched (classification system followed by classification symbols)
C08B37/16, C08G65/04

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)
CA/REGISTRY(STN)

C. DOCUMENTS CONSIDERED TO BE RELEVANT

| Category* | Citation of document, with indication, where appropriate, of the relevant passages | Relevant to claim No. |
|---|---|---|
| Y | WO 2005/080469 A1 (Kozo ITO), 11 January 2005 (11.01.2005), example 3 & JP 4821005 B & US 2009/0312490 A1 & EP 1707587 A1 | 1-8 |
| Y | WO 2009/069605 A1 (Advanced Softmaterials Inc.), 04 June 2009 (04.06.2009), synthesis examples 1, 2, 6 (Family: none) | 1-8 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 19 April, 2013 (19.04.13) | 07 May, 2013 (07.05.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

INTERNATIONAL SEARCH REPORT

International application No. PCT/JP2013/059909

C (Continuation). DOCUMENTS CONSIDERED TO BE RELEVANT

| Category* | Citation of document, with indication, where appropriate, of the relevant passages | Relevant to claim No. |
|---|---|---|
| Y | ARAKI.J.,et al, "Polyrotaxane derivatives. I. Preparation of modified polyrotaxanes with nonionic functional groups and their solubility in organic solvents", Journal of Polymer Science Part A: Polymer Chemistry, Vol.44, Issue.21, 2006, pp 6312-6323 | 1-8 |
| Y | JP 2006-233144 A (Sanyo Chemical Industries, Ltd.), 07 September 2006 (07.09.2006), paragraphs [0021] to [0024]; example 12 (Family: none) | 1-8 |
| Y | JP 9-227174 A (Nippon Starch Chemical Co., Ltd.), 02 September 1997 (02.09.1997), example 1 (Family: none) | 1-8 |
| Y | JP 49-5193 A (Morishita Pharmaceutical Co., Ltd.), 17 January 1974 (17.01.1974), claim 1; examples 1, 2 (Family: none) | 1-8 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005080469 A
- JP 2001083566 A
- JP H10306104 B
- JP 2011178931 A
- JP S59104334 B
- JP 2002212125 A
- JP 2011509998 A
- JP 2012082226 A


### Non-patent literature cited in the description


- *Applied Catalysis B: Environmental,* 2011, vol. 104, 54-63
- *Macromolecules,* 1993, vol. 26, 5698-5703